# EUROPÄISCHE PATENTANMELDUNG

(11) **EP 1 662 114 A2**
(43) Veröffentlichungstag der Anmeldung: **31.05.2006**
(21) Anmeldenummer: 05090319.4
(22) Anmeldetag: 18.11.2005
(51) Int. Cl.: F02C 3/28, F02C 3/20

(54) **Verfahren zur Bereitstellung eines Brennstoffes für die Gasturbine eines IGCC-Kraftwerkes**

(30) Priorität: 30.11.2004 DE 102004058759
(71) Anmelder: Vattenfall Europe Generation AG & Co. KG, 03050 Cottbus (DE)
(72) Erfinder: Meyer, Bernd, 09599 Freiberg (DE); Lorenz, Katrin, 09599 Freiberg (DE); Korobov, Dmitry, 09599 Freiberg (DE); Rauchfuss, Hardy, 09199 Chemnitz (DE); Ogriseck, Sirko, 09599 Freiberg (DE); Altmann, Hubertus, 02957 Krauschwitz (DE); Burchhardt, Uwe, 12683 Berlin (DE)

(57) **Zusammenfassung**

Die Erfindung betrifft ein Verfahren zur Bereitstellung eines Brennstoffes für die Gasturbine eines IGCC-Kraftwerkes.

Der Erfindung liegt die Aufgabe zugrunde, ein Gas- und Dampfturbinenkraftwerk mit integrierter Kohlevergasung so zu betreiben, dass die Brennstoffversorgung der Gasturbine gleichmäßig und unterbrechungsfrei gewährleistet ist.

Diese Aufgabe wird in Verbindung mit den Merkmalen des Oberbegriffs des Patentanspruchs 1 dadurch gelöst, dass ein um 5 bis 40 % höherer Brenngasstrom (2) erzeugt wird, als er der Lastanforderung der Gasturbinenanlage (15) entspricht und
von dem Brenngasstrom (2) ein Teilstrom (5) so abgezogen wird, dass die Lastanforderung der Gasturbinenanlage (15) erfüllt wird und dieser Teilstrom (5) mindestens einer teilweisen Verwertung in der Methanolsyntheseanlage (7) zugeführt wird und das erzeugte Methanol (8) zumindest teilweise in einem Methanolpuffer (9) gespeichert wird und
bei Ausfall oder Leistungsabfall der Vergasungsanlage (1) Methanol (13) so zugeführt, dass die Lastanforderung der Gasturbinenanlage (15) weiterhin erfüllt wird.

## Beschreibung

Die Erfindung betrifft ein Verfahren zur Bereitstellung eines Brennstoffes für die Gasturbine eines IGCC-Kraftwerkes, bestehend aus einer Kohlevergasungsanlage, einer Gaskonditionierungsanlage, einer Gasturbinenanlage mit einem Gasturbinenregelventil und einer Dampfturbinenanlage, wobei ein Brenngasstrom zum Gasturbinenregelventil und ein davon abzweigender Teilstrom einer Methanolsyntheseanlage zugeführt werden.

Gas- und Dampfturbinenkraftwerke mit integrierter Kohlevergasung (IGCC) ermöglichen eine Stromerzeugung mit sehr hohen Wirkungsgraden. Außerdem eignen sich IGCC-Kraftwerke sehr gut zur Realisierung einer CO₂-freien Kraftwerkstechnik, da das anfallende Kohlendioxid bereits bei der Gaskonditionierung entfernt werden kann. Ein Problem beim Betrieb von IGCC-Kraftwerken stellen jedoch die prozessbedingten stochastischen Brenngasschwankungen nach dem Vergaser, insbesondere bei Festbett- und Wirbelschichtvergasung, dar. Bedingt durch eine ebenfalls schwankende Brenngaszusammensetzung liegen die relativen Schwankungen des Heizwertstromes noch über den relativen Schwankungen des Mengenstromes. Eine Vergleichmäßigung der Brenngasschwankungen findet durch eine Pufferung im Gasvolumen der Gasreinigung statt. Eine weitere Vergleichmäßigung der Heizwertstromschwankungen wird durch das Gasturbinenregelventil gewährleistet, wodurch ein Druckabfall von ca. 4 bis 6 bar in Kauf genommen werden muss. Damit sind eine Erhöhung des Vergasungsdruckes um ca. 5 bis 6 bar und entsprechende Erhöhungen der Nebenverbräuche verbunden. Ein weiterer Nachteil von IGCC-Anlagen ist der relativ komplizierte Aufbau, der mit einem hohen anlagentechnischen Aufwand erkauft wird. Die Arbeitsverfügbarkeit von IGCC-Anlagen beträgt demzufolge nur 70 - 80 %. Die Hauptursachen für die geringen Verfügbarkeiten liegen im Prozess der Brenngaserzeugung. Der nachfolgende Gas- und Dampfturbinenprozess kann mit sehr hohen Verfügbarkeiten betrieben werden.

Die DE 2807326 A1 beschreibt ein Verfahren zum Betreiben eines Gas- und Dampfturbinenkraftwerkes.

Dabei wird zentral ein Brennstoff (Synthesegas, Methan-Starkgas, Methanol) erzeugt und an dezentrale Verbraucher weitergeleitet. Die dezentrale Nutzung erfolgt über Gas- und Dampfturbinenkraftwerke. Die Speicherung von Methanol im Grundlastbetrieb ermöglicht eine Abdeckung der Spitzenstromerzeugung und die Bedarfsdeckung bei Ausfall der Vergasungsanlage. Aufgrund der räumlichen Trennung von Erzeugung und Nutzung können folgende Synergien zwischen Vergasungsanlage und Gas- und Dampfturbinenkraftwerk nicht genutzt werden:
- Auskopplung von Prozessdampf für die Vergasungsanlage aus dem Dampfkreislauf,
- Einkopplung von Wärme aus dem Vergaserteil in den Dampfkreislauf.

Demzufolge sind die hohen Wirkungsgrade des IGCC-Prozesses nicht mehr erreichbar.

In der DE 3319732 A1 wird ein Mittellastkraftwerk mit integrierter Kohlevergasungsanlage zur Erzeugung von Strom und Methanol vorgestellt. Der Brenngasstrom zum Gas- und Dampfturbinenkraftwerk wird in Abhängigkeit von der jeweiligen Lastanforderung so regelt, dass einzelne Methanolsynthesemodule zu- bzw. abgeschaltet werden. Die Konstanthaltung des Druckes in der Reingasversorgungsleitung wird dadurch realisiert, dass ein Druckspeicher zwischen geschaltet wird. Diese Lösung stellt eine analgentechnisch aufwendige Möglichkeit dar, da sowohl mehrere Synthesemodule als auch ein zusätzlicher Druckspeicher benötigt werden. Ungelöst bleiben die Probleme, die mit der unzureichenden Verfügbarkeit der Vergasungsanlage verbunden sind.

Der Erfindung liegt die Aufgabe zugrunde, ein Gas- und Dampfturbinenkraftwerk mit integrierter Kohlevergasung so zu betreiben, dass die Brennstoffversorgung der Gasturbine gleichmäßig und unterbrechungsfrei gewährleistet ist.

Diese Aufgabe wird in Verbindung mit den Merkmalen des Oberbegriffs des Patentanspruchs 1 dadurch gelöst, dass ein um 5 bis 40 % höherer Brenngasstrom erzeugt wird, als er der Lastanforderung der Gasturbinenanlage entspricht und von dem Brenngasstrom ein Teilstrom so abgezogen wird, dass die Lastanforderung der Gasturbinenanlage erfüllt wird und dieser Teilstrom mindestens einer teilweisen Verwertung in der Methanolsyntheseanlage zugeführt wird und das erzeugte Methanol zumindest teilweise in einem Methanolpuffer gespeichert wird und bei Ausfall oder Leistungsabfall der Vergasungsanlage Methanol so zugeführt, dass die Lastanforderung der Gasturbinenanlage weiterhin erfüllt wird.

Die Erfindung macht sich die Erkenntnis zu Nutze, dass die Brenngaserzeugungsanlage gegenüber der Gasturbinenanlage mit einer Leistungsreserve von ca. 5 bis 20 % ausgelegt werden muss, um die nötige Sicherheit zur Erfüllung der Lastanforderung der Gasturbine zu gewähren. Diese über die Lastanforderung hinausgehende Leistungsreserve in Form des überschüssigen Brenngasstromes wird genutzt, indem Methanol in einer Methanolanlage erzeugt und mindestens teilweise gespeichert wird. Niedrige Werte der Leistungsreserve in einem Bereich von ca. 5 bis 20 % werden bei Volllast der Gasturbinenanlage und hohe Werte der Leistungsreserve in einem Bereich von 10 bis 40 % werden bei Teillast der Gasturbinenanlage für die Erzeugung von Methanol genutzt.

Der Vorteil der Erfindung besteht in der Möglichkeit der Entkopplung von Gas- und Dampfturbinenbetrieb und Vergasungsanlagenbetrieb durch zwischengespeichertes Methanol, das den Ausfall oder die Reduzierung des Brenngasstromes zur Gasturbine kompensieren kann. Damit kommt es zu einer deutlichen Erhöhung der Verfügbarkeit des IGCC-Kraftwerkes. Die Erfindung wirkt sich weiterhin besonders vorteilhaft aus, da durch den Abzug des überschüssigen Brenngasstromes eine Vergleichmäßigung des Brenngasmassenstromes stattfindet und damit eine Verminderung des notwendigen Druckverlustes über das Gasturbinenregelventil einhergeht. Unter Umständen kann auf das Gasturbinenregelventil vollkommen verzichtet werden bzw. das Gasturbinenregelventil übernimmt nur noch die Funktion eines Rückschlagventils bei plötzlichem Lastabfall. Die Verringerung des notwendigen Druckverlusts über das Gasturbinenregelventil führt weiterhin dazu, dass die Vergasung bei geringerem Druck betrieben werden kann und die Betriebsmittel ebenfalls bei geringerem Druck bereitgestellt werden müssen.

Damit kommt es zu einer deutlichen Verminderung der Nebenverbräuche und zur Erhöhung des Wirkungsgrads des IGCC-Kraftwerkes.

Anhand eines Ausführungsbeispiels soll nachstehend die Erfindung näher erläutert werden. Die zugehörige Figur zeigt eine schematische Darstellung des IGCC-Kraftwerkes.

Ein Gas- und Dampfturbinenkraftwerke mit integrierter Kohlevergasung (IGCC) besteht im Wesentlichen aus einer Kohlevergasungsanlage 1, einer Gaskonditionierungsanlage 3, einem Gasturbinenanlage 15 mit einem Gasturbinenregelventil 14 und einer Dampfturbinenanlage 16. Die Kohlevergasungsanlage 1 erzeugt einen Brenngasstrom 2 von 200 kg/s. Zum Volllastbetrieb der Gasturbinenanlage 15 müsste jedoch in der Vergasungsanlage 1 nur ein Brenngasstrom 2 von 170 kg/s erzeugt werden. Die überschüssigen 30 kg/s entsprechen einer Leistungsreserve der Vergasungsanlage 1 von 15 %, d. h. es wird ein um 15 % höherer Brenngasstrom 2 erzeugt, als er der Lastanforderung der Gasturbinenanlage 15 entspricht. Durch die Gaskonditionierung 3 erfolgt eine Reduktion des konditionierten Brenngasstromes 2 auf 50 % des Brenngasstromes 2, welcher aus der Kohlevergasungsanlage 1 kommt, da bei der Gaskonditionierung 3 unerwünschte Gasanteile (überwiegend CO₂ und H₂S) entfernt werden. Der konditionierte Brenngasstrom 2 liegt somit nach der Gaskonditionierung 3 bei 100 kg/s, wobei jedoch zum Volllastbetrieb der Gasturbinenanlage 15 nur ein Brenngasstrom 2 von 85 kg/s vor dem Gasturbinenregelventil 14 benötigt wird. Von dem konditionierten Brenngasstrom 2 wird bei Volllast der Gasturbinenanlage 15 ein Teilstrom 5 in Höhe von 20 kg/s so abgezogen, dass ein konstanter, reduzierter Brenngasstrom 2 von 80 kg/s verbleibt. In der Methanolsyntheseanlage 7 wird aus dem abgezogenen Teilstrom 5 von 20 kg/s Methanol 8 erzeugt. Die Ausbeute der Methanolsyntheseanlage 7 beträgt 75 %. Als Produkte der Methanolsyntheseanlage 7 fallen somit 15 kg/s Methanol 8 und 5 kg/s Purgegas 10 an. Das unter erhöhtem Druck anfallende Purgegas 10 wird aus dem Kreislaufgas der Methanolsyntheseanlage 7 abgetrennt und dem reduzierten Brenngasstrom 2 wieder zugemischt, so dass der Brenngasstrom 2, der zum Gasturbinenregelventil 14 geführt wird, nach der Purgegaszumischung 85 kg/s beträgt und damit der Volllastbetrieb der Gasturbinenanlage 15 möglich und die Lastanforderung erfüllt ist.

Das nicht zugeführte Methanol 8 wird in einem Methanolpuffer 9 gespeichert und bei Ausfall des Brenngasstromes 2 der Gasturbinenanlage 15 zugeführt und damit die Lastanforderung der Gasturbinenanlage 15 erfüllt wird. Bei vollständig gefülltem Methanolpuffer 9 kann das überschüssige Methanol 11 für weitere Verwendungszwecke abgegeben werden. Wird die Gasturbinenlast auf 85 % Teillast gesenkt, wird vor dem Gasturbinenregelventil 14 nur noch ein Brenngasstrom 2 von 72,25 kg/s anstatt 85 kg/s benötigt. Aus dem konditionierten Brenngasstrom 2 nach der Gaskonditionierung 3 muss somit ein größerer Teilstrom 5 zur Methanolsyntheseanlage 7 abgezogen werden als bei Volllast der Gasturbinenanlage 15. Zur Einstellung eines Brenngasstromes 2 von 72,25 kg/s vor dem Gasturbinenregelventil 14 müssen von den 100 kg/s des konditionierten Brenngasstromes 2 aus der Gaskonditionieranlage 3 37 kg/s als Teilstrom 5 abgezogen und der Methanolsyntheseanlage 7 zugeführt werden. Der in der Methanolsyntheseanlage 7 nunmehr anfallende Purgegasstrom von 9,25 kg/s wird dem reduzierten Brenngasstrom 2 wieder zugemischt . Weiterhin werden die in der Methanolsyntheseanlage 7 erzeugten 27,75 kg/s Methanol 8 dem Methanolpuffer 9 zugeführt.
Das erzeugte Methanol 12 und 13 kann über geregelte Zuführungen 17 und 18 dem Brenngasstrom 2 vor und/oder nach dem Gasturbinenregelventil 14 zum Ausgleich von Brenngasstromschwankungen ebenfalls wieder zugeführt werden.

### Aufstellung der verwendeten Bezugszeichen

- 1: Kohlevergasungsanlage
- 2: Brenngasstrom
- 3: Gaskonditionierungsanlage
- 5: Teilstrom
- 7: Methanolsyntheseanlage
- 8: Methanol
- 9: Methanolpuffer
- 10: Purgegas aus der Methanolsynthese
- 11: Methanol
- 12: Methanol
- 13: Methanol
- 14: Gasturbinenregelventil
- 15: Gasturbinenanlage
- 16: Dampfturbinenanlage
- 17: geregelte Zuführung
- 18: geregelte Zuführung

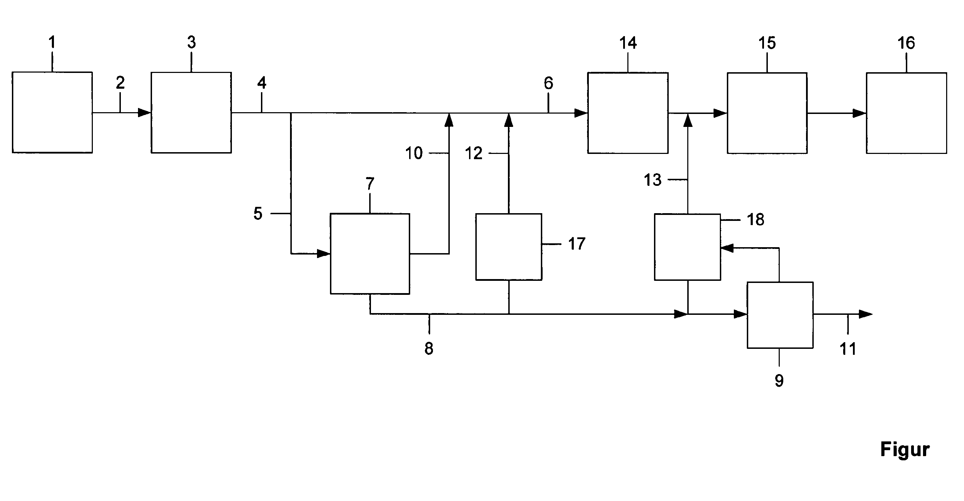

## Patentansprüche

1. Verfahren zur Bereitstellung eines Brennstoffes für die Gasturbine eines IGCC-Kraftwerkes, bestehend aus einer Kohlevergasungsanlage (1), einer Gaskonditionierungsanlage (3), einer Gasturbinenanlage (15) mit einem Gasturbinenregelventil (14) und einer Dampfturbinenanlage (16), wobei ein Brenngasstrom (2) zum Gasturbinenregelventil (14) und ein davon abzweigender Teilstrom (5) einer Methanolsyntheseanlage (7) zugeführt werden,
**gekennzeichnet dadurch,**
**dass** ein um 5 bis 40 % höherer Brenngasstrom (2) erzeugt wird, als er der Lastanforderung der Gasturbinenanlage (15) entspricht und
von dem Brenngasstrom (2) ein Teilstrom (5) so abgezogen wird, dass die Lastanforderung der Gasturbinenanlage (15) erfüllt wird und
dieser Teilstrom (5) mindestens einer teilweisen Verwertung in der Methanolsyntheseanlage (7) zugeführt wird und das erzeugte Methanol (8) zumindest teilweise in einem Methanolpuffer (9) gespeichert wird und
bei Ausfall oder Leistungsabfall der Vergasungsanlage (1) Methanol (13) so zugeführt, dass die Lastanforderung der Gasturbinenanlage (15) weiterhin erfüllt wird.

2. Verfahren nach Anspruch 1, **gekennzeichnet dadurch, dass** 5 bis 20 % des Brenngasstromes (2) als Teilstrom (5) abgezogen werden, wenn die Gasturbinenanlage (15) bei Volllast und 10 bis 40 % des Brenngasstromes (2) als Teilstrom (5) abgezogen werden, wenn die Gasturbinenanlage (15) bei Teillast betrieben wird.

3. Verfahren nach Anspruch 1 oder 2, **gekennzeichnet dadurch, dass** das Purgegas (10) der Methanolsyntheseanlage (7) dem Brenngasstrom (2) vor dem Gasturbinenregelventil (14) zugemischt wird.
